# DEMANDE DE BREVET EUROPEEN

(11) **EP 2 746 960 A1**
(43) Date de publication de la demande: **25.06.2014**
(21) Numéro de dépôt: 13199200.0
(22) Date de dépôt: 20.12.2013
(51) Int. Cl.: G06F 17/27, G06F 17/30, G06Q 10/00

(54) **Procédé de structuration de données se présentant sous forme alphanumérique**

(30) Priorité: 20.12.2012 FR 1262484
(71) Demandeur: Susplugas, Vincent, 75011 Paris (FR)
(72) Inventeur: Susplugas, Vincent, 75011 Paris (FR)
(74) Mandataire: Thiollier, Clémence-Olivia Laure Marie

(57) **Abrégé**

Les données se présentent sous forme alphanumérique dans une zone de texte. Le procédé comprend les étapes suivantes :
- une étape (108) de reconnaissance d'une ou plusieurs phrases dans le groupe de données en phrases, par détection de signes de ponctuation prédéterminés se trouvant parmi les données ou par analyse syntaxique du groupe de données,
- une étape (114) de création d'un identifiant de la phrase, appelé brique,
- une étape (136) de recherche, dans une base de données, de briques considérées comme des briques proches de cette brique créée,
- une étape (138) d'importation de données associées à ces briques proches dans la base de données (24).

## Description

La présente invention concerne un procédé de structuration de données se présentant sous forme alphanumérique.

Ce procédé peut être mis en oeuvre sur un texte ou un ensemble de textes, stocké(s) ou en cours de saisie, sur une page accessible via un réseau Internet ou Intranet, ou encore directement sur le terminal de communication d'un particulier ainsi que toute autre source comprenant des éléments textuels ou toute forme de données alphanumériques. La méthode est mise en oeuvre par un programme d'ordinateur interagissant avec une base de données. On entend par programme d'ordinateur tout programme informatique, notamment un programme mis en oeuvre par un serveur de télécommunication.

On constate que, face à une multitude d'informations numériques dont nous disposons aujourd'hui, sur Internet et dans les fichiers stockés dans les terminaux de communication, il est nécessaire de structurer ces informations dans le but d'éviter d'avoir à tout lire pour disposer d'une idée sur l'état des connaissances disponibles à un moment donné, dégager une vision d'ensemble et faciliter la confrontation des informations entre elles.

On peut partir de l'exemple d'un article de journal ou de la présentation d'un film cinématographique accessible sur une page Internet et au sujet duquel des internautes peuvent poster des commentaires. Les commentaires peuvent exposer différents points de vue, certains allant dans le sens de l'auteur, d'autres dans le sens contraire, certains allant plus dans le détail que d'autres, certains étant plus fiables que d'autres, etc.

La présente invention a notamment pour but de proposer une technique de structuration des données, permettant de les analyser, de les regrouper automatiquement et de les présenter de façon à faciliter leur exploitation et leur compréhension ultérieure par un utilisateur. Grâce à cette façon de structurer les données, on peut ensuite utiliser les données stockées pour les associer de façon intelligente à d'autres données.

A cet effet, l'invention a notamment pour objet un procédé de structuration de données se présentant sous forme alphanumérique, comprenant les étapes suivantes :
- une étape de reconnaissance d'une ou plusieurs phrases dans le groupe de données en phrases, par détection de signes de ponctuation prédéterminés se trouvant parmi les données ou par analyse syntaxique du groupe de données,
- une étape de création d'un identifiant de la phrase, appelé brique,
- une étape de recherche, dans une base de données, de briques considérées comme des briques proches de cette brique créée,
- une étape d'importation de données associées à ces briques proches dans la base de données.

Ainsi, on propose de décomposer les données sous forme de phrases et de définir des briques permettant d'identifier chacune de ces phrases. A partir de cet identifiant qu'est la brique, on peut lui associer des données stockées dans la base de données, tout particulièrement par la recherche des briques proches, puis importer et afficher ces données. Il en résulte par exemple que l'on peut indiquer, à un utilisateur en train de saisir des informations, d'autres informations présentant une certaines similarité avec celles qu'il saisit, ou bien présentant un intérêt particulier au vu de ce qu'il est en train de saisir. On propose donc ici de façon avantageuse, non pas de structurer des données par document, comme cela pourrait être le cas lorsque l'on référence des documents dans une base de données, à partir par exemple de leur titre, de leur thème, de leur auteur ; ni de structurer les données par mots, comme cela pourrait être le cas par exemple dans les moteurs de recherche, qui procèdent par analyse de mots et d'emplacement de mots les uns par rapport aux autres ; mais de structurer les données par phrase. Il se trouve en effet que la technique actuelle de structuration de données n'utilise pas de techniques liées à une analyse réalisée au niveau de la phrase, à des fins de structurations des phrases les unes par rapport aux autres.

Parmi les applications particulièrement intéressantes du procédé tel que proposé ici, se trouve la structuration, non pas uniquement de savoirs, mais de pensées, telles que les débats d'idées ou les opinions d'individus. De nombreuses techniques existent actuellement permettant la capitalisation et la structuration de savoirs, telles que par exemple les techniques utilisées dans l'encyclopédie connue sous le nom de « Wikipedia ». S'il fallait recourir à ces techniques pour structurer des pensées, il faudrait employer presque autant de pages qu'il y a de pensées différentes sur un même sujet, ou admettre que la pensée exprimée sur un sujet soit celle du dernier à s'être exprimé, occultant celles de ses prédécesseurs. Il se trouve qu'aucune technique n'a été cependant trouvée pour structurer, analyser, puis présenter efficacement la pensée d'un grand nombre d'individus. On précise que le champ des « savoirs » est défini comme celui de données dont la question associée renvoie à des réponses ne faisant pas l'objet de débats, telles que « la capitale de la France est Paris » : à la question « la capitale de la France est-elle Paris ? », la réponse est sans débats « oui ». Le champ de la « pensée » est ici défini comme celui des données dont la question associée renvoie à de multiples réponses possibles, qu'il s'agisse notamment du recours à des arguments différents, à des structurations spécifiques de ceux-ci les uns par rapport aux autres, ou de l'évaluation de ce qui les lient (importance relative, fiabilité, confirmation versus infirmation, etc.). La « pensée collective » relative à une question est définie comme l'ensemble des réponses apportées à une même question par un ensemble d'individus. C'est cette pensée collective que le procédé proposé dans la présente demande permet de structurer.

Plus précisément, on propose de créer un identifiant des phrases de sorte que l'on puisse associer la phrase à un argument et que l'on puisse ensuite importer des données associées à cet argument, en les structurant de sorte qu'elles sont par exemple classées comme appartenant à la thèse, à l'antithèse ou à la synthèse de cet argument. D'autres illustrations de ces données sont décrites dans la suite. On notera que l'étape d'importation de données associées aux briques proches dans la base de données permet une structuration interne riche du document, s'appuyant sur des développements, structurations et/ou qualifications déjà réalisés par ailleurs par d'autres individus ou d'autres structures. Les informations sont ainsi progressivement liées entre elles, non d'un document vers un autre, ou de mots vers un ou plusieurs autre(s) document(s) (caractéristique d'un lien de type html ou d'un moteur de recherche), mais de plusieurs sous-éléments d'un document (les phrases en l'occurrence) à plusieurs sous-éléments de plusieurs autres documents.

Parmi les applications intéressantes d'une telle structuration de la pensée, on comprend que l'on peut structurer en particulier les opinions de lecteurs d'un journal, notamment les opinions politiques, les opinions de spectateurs d'un film cinématographique, ou encore les opinions de consommateurs, notamment relatives à un restaurant ou à une prestation culturelle. Selon encore un autre exemple d'application intéressante, on peut structurer différentes études stockées sur un terminal ou un réseau, tout particulièrement une multiplicité d'études effectuées par un avocat ou un cabinet d'avocat, de façon à recenser de façon structurée des ensembles argumentaires, des textes de lois, décisions de jurisprudence, opinions de doctrine et/ou des études personnelles.

On comprend que la reconnaissance de phrase est automatique, elle peut avoir lieu par détection de signes de ponctuation prédéterminés et/ou par analyse syntaxique du groupe de données. Dans ce cas, on peut déterminer automatiquement qu'un groupe de donnée constitue une phrase, du fait par exemple de la détection dans le groupe d'un verbe conjugué, d'un sujet et/ou d'un complément. D'autres formes d'analyses automatiques sont bien sûr possibles. De préférence, on entend par « phrase » un ensemble autonome de mots comprenant au moins un sujet et un verbe.

Les données importées sont de préférence affichées. Plus précisément, on affiche de préférence l'argument de la brique proche ainsi que ses qualificatifs, en particulier une note relative à son importance ou sa fiabilité ou tout autre qualificatif susceptible d'être paramétré. De façon avantageuse, on peut conditionner l'affichage aux briques dont la fiabilité ou l'importance ont une note supérieure à un seuil prédéterminé. On peut également apporter une mise en forme aux données affichées, de façon à mettre en évidence le niveau de développement de la brique proche en question, par exemple en mettant en retrait l'argument d'une brique considérée comme une sous-brique ou encore en mettant en gras ou dans une couleur prédéfinie une brique considérée comme une sur-brique.

Le procédé peut en outre comporter l'une ou plusieurs des caractéristiques suivantes, prises seules ou en combinaison.

La création de la brique comporte l'une ou plusieurs des étapes suivantes :
- une étape d'attribution d'un identifiant numérique à la phrase ;
- une étape de détermination de la nature de la phrase ;
- une étape de constitution d'un triplet d'informations, comprenant de préférence un argument, une question correspondant à l'argument, et un argument contraire ; et/ou
- une étape de qualification de la brique.

Ainsi, la brique créée peut permettre d'identifier la phrase grâce à un identifiant numérique, une nature de la phrase, un triplet d'informations incluant un argument déduit à partir du contenu de la phrase, et/ou des qualificatifs. On comprend que l'on peut envisager que la création de la brique comprenne une seule des étapes ci-dessus. Par ailleurs, on peut éventuellement envisager de constituer comme identifiant, non pas un triplet d'informations comprenant un argument, une question et un argument contraire, mais uniquement l'un ou deux de ces trois éléments, par exemple un argument. On peut également prévoir de constituer le triplet ultérieurement, à partir de l'élément constitué dans un premier temps, qu'il s'agisse d'un argument, d'une question ou d'un argument contraire.

L'étape de qualification de la brique comprend l'une ou plusieurs des étapes suivantes :
- une étape d'analyse sémantique d'un argument, d'une question ou d'un argument contraire constitués à partir de la phrase, comprenant une étape de test sur la présence dans l'argument de certains mots prédéterminés permettant de qualifier l'argument en proposition ;
- une étape d'attribution d'un contexte à la brique, le contexte étant déduit à partir d'un vecteur dans une base vectorielle constituée par un lexique de mots prédéterminés ; et/ou
- une étape d'attribution d'une note relative à la fiabilité ou à l'importance de la brique.

On notera qu'il est particulièrement intéressant d'attribuer un contexte à la brique, du fait que les idées ou opinions dépendent généralement d'un contexte particulier. Par exemple, une phrase peut mentionner une crise, sans pour autant préciser de quelle crise il s'agit. Aussi, l'attribution d'un contexte à la brique permet par la suite de sélectionner de façon plus satisfaisante les briques proches, et donc d'importer des données plus pertinentes au cours ou après la saisie de phrases. Le contexte peut être défini par le vecteur précité, ou bien être déduit à partir d'un tel vecteur. Selon un exemple, le lexique de mots prédéterminés est un lexique universel pour une langue donnée. Toutefois pour compresser et réduire le nombre de calculs, on peut recourir à une base réduite, telle qu'un lexique réduit comprenant des mots particulièrement utilisés dans la base de données. On peut également déduire, à partir du rapprochement de briques sur la base vectorielle, formant par exemple un dictionnaire de briques présentant un contexte similaire, un ensemble de données définissant le contexte.

Le procédé comprend une étape d'attribution d'un niveau de développement de la brique, correspondant à l'attribution d'un ou plusieurs liens entre la brique créée et d'autres briques stockées dans la base de données, l'étape d'attribution du niveau de développement comprenant de préférence :
- une étape d'attribution automatique du niveau de développement, le niveau de développement étant défini par la zone de texte (16), et/ou
- une étape d'analyse de la brique, l'analyse pouvant comprendre une recherche d'au moins un mot de liaison dans la phrase correspondante, ou une analyse de la proximité sémantique de la brique avec d'autres briques stockées dans la base de données.

L'attribution du niveau de développement permet entre autres termes d'établir des liens entre les briques, ce qui contribue à déterminer par la suite ce que sont des briques proches, et donc quelles données importer. On entend par « niveau de développement » un lien entre deux briques. Ce niveau de développement pourrait également être appelé « positionnement structurel ». Il n'implique pas forcément de hiérarchie entre les deux briques reliées. Par ailleurs, une brique peut être, et est généralement, reliée à plusieurs briques. En outre, une même brique peut être rattachée à plusieurs positions, ou niveaux de développement. On inclut généralement dans « mot de liaison » une expression de liaison.

Les briques proches recherchées au cours de l'étape de recherche présentent une similarité sémantique avec la brique considérée et/ou présentent un même niveau de développement et/ou un contexte similaire ou identique à celui de la brique considérée.

Les données associées aux briques proches sont ainsi susceptibles de porter sur une idée proche de celle concernée par la phrase considérée, donc d'intéresser l'utilisateur. On notera que l'on inclut dans l'expression « similarité sémantique » la présence d'une similarité lexicale et/ou syntaxique.

La reconnaissance d'une phrase dans le groupe de données est suivie d'une étape de nettoyage sémantique de la phrase, comprenant de préférence une étape de suppression des éléments de personnalisation et/ou des éléments de liaison de la phrase.

On peut ainsi stocker, dans la base de données, des informations qui sont le plus exploitables possible ultérieurement, en dehors du cadre dans lequel elles ont été saisies par un utilisateur. En outre, on évite de stocker, dans les briques, des mots ou ensembles de mots considérés comme inutiles ou peu signifiants pour structurer des idées.

La reconnaissance d'une phrase dans le groupe de données ou l'étape de nettoyage sémantique de la phrase est suivie d'une recherche, dans la base de données, d'un score de significativité attribué à chaque mot de la phrase, du calcul d'un score moyen de la phrase, puis dans le cas où le score est inférieur à un seuil prédéterminé, d'une étape de suppression de la phrase ou d'absence de prise en compte de la phrase.

On optimise ainsi le procédé, en évitant de créer des briques relatives à des phrases peu signifiantes pour structurer des idées.

Le procédé est mis en oeuvre au cours de la saisie du groupe de données.

Par exemple, il est mis en oeuvre au cours de la saisie d'un commentaire sur un site Internet, par un internaute. Selon un autre mode de réalisation intéressant, il peut être mis en oeuvre au cours de la saisie d'un texte par un utilisateur, localement sur un terminal de communication. Par exemple, lorsque l'utilisateur rédige une étude sur un sujet particulier, le procédé permet d'importer des données associées à des briques proches, stockées sur une base de données externe et/ou sur le terminal de communication.

Le procédé est mis en oeuvre suite à une activation de la part l'utilisateur.

Il peut par exemple être mis en oeuvre sur un texte préenregistré ou sur un texte venant d'être saisi, que le texte soit présent sur un site Internet ou stocké localement dans un terminal de communication. L'activation de la part de l'utilisateur peut prendre diverses formes, par exemple par activation d'un bouton.

L'étape de création de la brique est suivie, directement ou indirectement, par une étape de stockage de la brique créée dans la base de données

Ainsi, le procédé permet non seulement d'importer des données susceptibles d'intéresser l'utilisateur, mais en outre d'enrichir la base de données, de préférence automatiquement, en y ajoutant les briques créées.

L'étape d'importation comprend une étape d'affichage des données associées à ces briques proches, est suivie d'une étape de modification, par l'utilisateur, des données affichées puis est de préférence suivie d'une étape de stockage des modifications correspondantes dans la base de données.

Ce mode de réalisation est avantageux en ce qu'il permet à l'utilisateur de rectifier un affichage de données qui ne lui semble pas pertinent, puis éventuellement de faire enregistrer ces modifications dans la base de données. Cette possibilité de rectifier est particulièrement intéressante du fait que la plupart des étapes relatives à la création de briques et à l'attribution de niveaux de développement sont faites automatiquement et qu'il est intéressant que les individus puissent les affiner.

L'étape de modification, par l'utilisateur, des données affichées comprend une étape de glisser-déposer de tout ou partie de ces données. Cette étape permet ainsi une modification ergonomique pour l'utilisateur. En effet, lorsqu'il souhaite par exemple modifier le niveau de développement d'une brique proche dont les données sont affichées, il suffit de sélectionner ces données et de les déplacer pour qu'elles apparaissent dans un niveau supérieur ou inférieur.

Les signes de ponctuation prédéterminés font partie du groupe comprenant un point, un point-virgule, un point d'exclamation ou d'interrogation, trois points de suspension, deux points et un retour à la ligne ou retour à la ligne réduit.

Le procédé comporte en outre une étape de création d'une brique particulière constituant un identifiant d'un ensemble de phrases, c'est-à-dire d'une pluralité de phrases. Dans ce cas-là, cette brique peut être appelée « brique article » ou encore « entité cognitive ». Elle présente une structure similaire aux briques présentées précédemment et servant d'identifiant de phrase, de façon qu'elle soit stockée dans la base de donnée de façon similaire, et que l'on puisse lui attribuer des niveaux de développement, correspondant à des liens avec d'autres briques, qu'ils s'agissent de briques identifiant des phrases ou des briques articles. On peut ainsi structurer dans la base de données, non seulement des phrases, mais également y associer des groupes de phrases, tels que des paragraphes, des groupes de paragraphes, ou encore des fichiers textes complets. Ainsi, l'ensemble de phrase peut être identifié, de façon similaire aux phrases isolées, par un identifiant numérique ; un triplet d'informations comprenant de préférence un argument, une question correspondant à l'argument, et un argument contraire ; et/ou une ou plusieurs qualifications, telles qu'un contexte. Par exemple, une brique article peut permettre d'identifier un article de journal. En d'autres termes, la « brique article » ou « entité cognitive » créée peut regrouper un ensemble de briques. Ce regroupement peut être effectué, selon des exemples non limitatifs, sur la base d'un positionnement sur l'interface de saisie, d'une proximité sémantique forte au regard des autres briques présentes, ou encore de liens logiques indiquant un changement d'ensemble argumentaire.

L'invention sera mieux comprise à la lecture de la description qui va suivre, donnée uniquement à titre d'exemple et faite en se référant aux dessins dans lesquels :
- La figure 1 est une vue schématique illustrant une page Internet au cours d'une étape donnée du procédé de structuration de données.
- La figure 2 est un diagramme illustrant les étapes du procédé de structuration de données selon un mode de réalisation.
- La figure 3 est une vue schématique illustrant un système de télécommunication mettant en oeuvre le procédé de structuration de données.
- La figure 4 est une vue schématique, illustrant une présentation possible d'un texte muni de données importées au moyen du procédé de la figure 1.
- La figure 5 est un diagramme illustrant un exemple de procédé d'affichage de données mis en oeuvre au cours du procédé de la figure 1.

Dans le présent exemple de réalisation, nous supposons que la méthode est mise en oeuvre sur un texte en train d'être saisi par un utilisateur sur un terminal de communication 20 (ordinateur, tablette numérique, etc.).

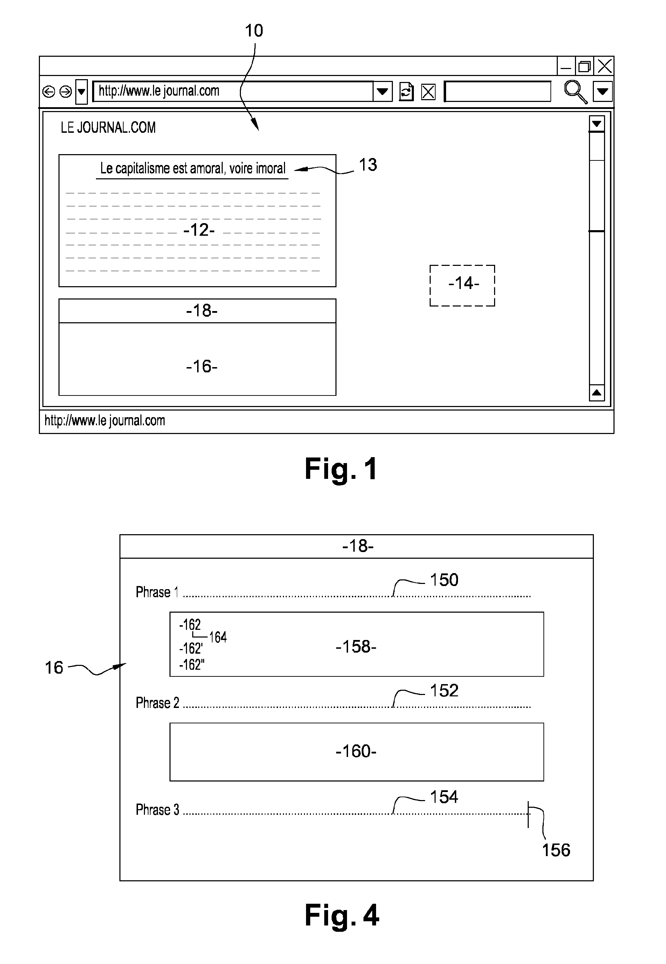

Le texte est saisi directement sur une page Internet 10 consultée via un réseau Internet 21 par l'utilisateur internaute depuis le terminal de communication 20, illustrée schématiquement sur la figure 1. Dans le présent l'exemple, la page 10 est la page Internet d'un journal, sur laquelle est rédigé un article d'un journaliste, dans une zone 12. Le titre 13 de cet article est « Le capitalisme est amoral, voire immoral ».

Un programme de structuration permettant la mise en oeuvre du procédé de structuration de données, appelé programme de structuration, est associé à cette page Internet. Ce programme est installé par exemple sur un serveur 22 hébergeant la page Internet, illustré sur la figure 4. Il est configuré pour interagir avec une base de données 24, dans laquelle sont stockées des données structurées préalablement, suite à des mises en oeuvre antérieures du programme, sur la même page Internet, sur d'autres pages Internet, dans d'autres fichiers stockés sur le terminal ou encore sur d'autres terminaux. Le programme peut par exemple être mis en oeuvre au moyen de la technologie JavaScript ou encore ActionScript du côté du terminal client 20, et php et mySQL côté serveur 22.

La page 10 comprend un bouton 14 intitulé « Ouvrir un débat », de sorte que si l'utilisateur souhaite saisir un commentaire suite à l'article lu dans la zone 12, il clique sur ce bouton 14. La page 1 comprend en outre une zone de saisie 16, configurée pour apparaître sur la page 10 après une activation du bouton 14.

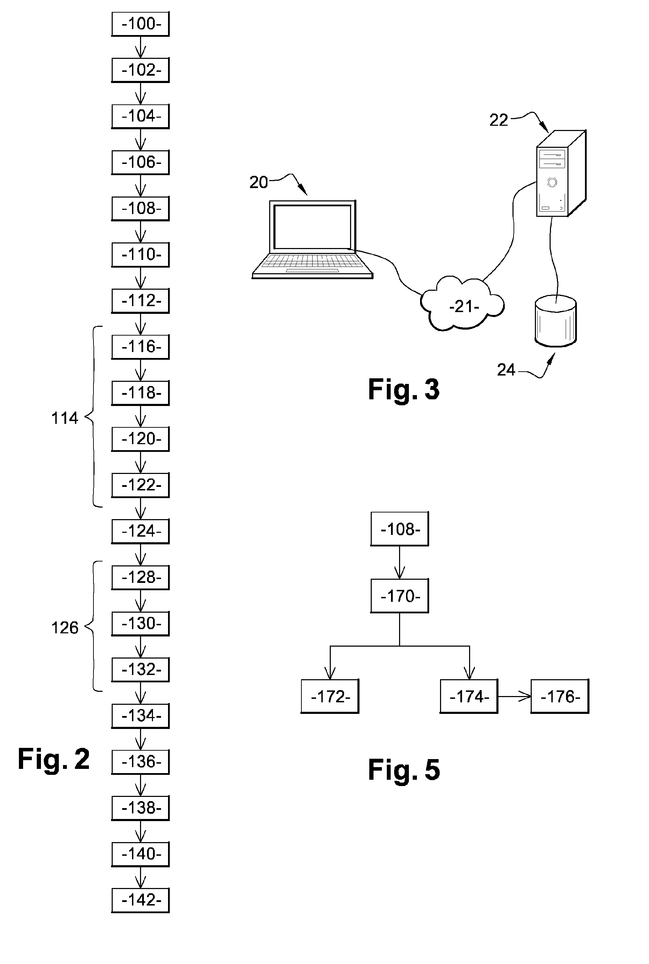

On va décrire à présent un exemple de mise en oeuvre du procédé de structuration de données, en référence à la figure 3.

L'utilisateur clique tout d'abord, selon une étape 100, sur le bouton 14, « Ouvrir un débat ». L'activation 100 du bouton 14 génère une étape 102 de création d'une brique dite « brique principale », ou encore « brique de niveau n+1 ». La brique principale peut prendre avantageusement la forme d'une « brique article » telle que présentée précédemment, servant d'identifiant de l'ensemble de l'article de journal de la zone 12. Cette étape 102 de création de brique permet notamment de générer une question à partir du titre 13 de l'article de journal, selon un procédé décrit ultérieurement. La question générée au cours de l'étape de création 102 est la suivante : « Est-ce que le capitalisme est amoral, voire immoral ? ». L'étape 102 de création de la brique comprend d'autres étapes, parmi lesquelles une qualification de la brique, au cours de laquelle on associe la brique à un contexte, déterminé à partir du texte de l'article de journal. Le contexte est décrit dans la suite de la description, il peut prendre la forme du vecteur suivant dans le présent exemple : (22, 37, 15, 3, 15, 0, 2...).

L'étape 102 de création de brique principale est suivie d'une étape 104 d'affichage de la zone de saisie 16, disposée en-dessous de l'article rédigé dans la zone 12. La zone de saisie 16 est munie d'un titre 18 correspondant à la question générée : « Est-ce que le capitalisme est amoral, voire immoral ? ».

L'utilisateur commence alors à saisir son texte dans la zone 16, ce texte constituant un groupe de données se présentant sous forme alphanumérique. Dans cet exemple, le texte que l'utilisateur souhaite saisir est le suivant :
*« Tout d'abord, je pense que la spéculation financière est une preuve de l'immoralisme du capitalisme. Par ailleurs, les scandales financiers constatés par le passés sont nombreux. Cependant, une régulation efficace permet d'ancrer le capitalisme dans une forme de morale ».*

Au cours d'une étape 106, le programme associé à la page 10 détecte la saisie d'un groupe de données dans la zone 16 et commence une analyse de ce groupe de données. Par exemple, il détecte la saisie des mots suivants : *« Tout d'abord, je pense que la spéculation financière est une preuve de l'immoralisme du capitalisme. Par ailleurs, les scandales financiers constatés par le passés sont nombreux. Cependant, une régulation efficace permet d'ancrer le capitalisme dans une forme de morale. ».*

L'analyse du groupe de données saisies comprend tout d'abord une étape 108 de de reconnaissance d'une ou plusieurs phrases dans le groupe de données, également appelée étape 108 de séparation du groupe de données en phrases. Cette étape 108 est mise en oeuvre par détection de signes de ponctuation prédéterminés parmi les données saisies dans la zone 16. En l'occurrence, les signes de ponctuation prédéterminés sont des points, des points virgule, des points d'exclamation ou d'interrogation, trois points de suspension, deux points et/ou des retours à la ligne. Plus précisément, le programme sélectionne tous les caractères alphanumériques se trouvant avant le signe de ponctuation détecté et considère qu'ils constituent une phrase. On notera que l'étape de séparation 108 est mise en oeuvre, dans cet exemple, au fil de la détection des signes de ponctuation. Selon un autre exemple, elle pourrait être mise en oeuvre suite à validation de sa contribution par l'utilisateur.

Ainsi dans l'exemple, l'étape 108 de séparation du groupe de données en phrases mène au résultat suivant :
Phrase 1 = *« Tout d'abord, je pense que la spéculation financière est une preuve de l'immoralisme du capitalisme »*
Phrase 2 = *« Par ailleurs, les scandales financiers constatés par le passés sont nombreux »*
Phrase 3 = *« Cependant, une régulation efficace permet d'ancrer le capitalisme dans une forme de morale »*

L'étape 108 de séparation en phrases est suivie d'une étape 110 de nettoyage sémantique de chaque phrase. Au cours de cette étape 110, chaque phrase est épurée d'éléments de rédaction qui sont considérés comme non significatifs, c'est-à-dire que l'on supprime des éléments considérés comme non constitutifs d'un argument ou comme dépendant d'une personne. Cette étape 110 comprend notamment la suppression d'éléments de personnalisation pouvant se trouver dans la phrase (tels que « je pense que », « je crois que », « il me semble que », « I think that », « I believe », etc.), ainsi que la suppression d'éléments de liaison, correspondant à des éléments de texte liant les phrases entre elles (tels que « ensuite », « enfin », etc.). Ces derniers sont en effet dépendants de la structuration initiale des données dans le texte saisi par l'utilisateur. D'une manière générale, la brique qui va être réalisée à l'issue de cette étape de nettoyage 110 et qui composera les données qui vont être stockées, comme cela est décrit dans la suite, est un objet conçu pour être universel et le plus indépendant possible des utilisateurs.

On notera qu'à l'issue de l'étape de nettoyage 110, si une phrase se retrouve désormais vide, alors elle ne suit pas les étapes qui suivent, aucune brique ne lui est attribuée.

Ainsi, l'étape de nettoyage sémantique consiste à supprimer notamment les éléments de personnalisation et les éléments de liaison de la phrase. Dans l'exemple, les phrases deviennent :
Phrase 1' = *« la spéculation financière est une preuve de l'immoralisme du capitalisme »*
Phrase 2' = « *les scandales financiers constatés par le passés sont nombreux* »
Phrase 3' = *« une régulation efficace permet d'ancrer le capitalisme dans une forme de morale »*

L'étape de nettoyage 110 peut éventuellement être suivie par une étape 112 de suppression de phrase, du fait qu'elle ne comporte pas de mot significatif permettant de la replacer dans un contexte. Par exemple, une phrase telle que « *Je crois que ceci est vrai* » n'est pas considérée comme apportant un enseignement et sera supprimée. La suppression d'une phrase peut être décidée en fonction de la valeur d'un score déduit en fonction de la relativement faible fréquence, dans une base de données prédéfinie telle que la base 24, des termes utilisés dans la phrase, ou encore de la fréquence de ce même terme dans la phrase. Plus précisément, l'étape de nettoyage 110 est suivie d'une recherche, dans la base de données 24, d'un score de significativité attribué à chaque mot de la phrase, du calcul d'un score moyen de la phrase, et dans le cas où le score est inférieur à un seuil prédéterminé, on supprime 112 la phrase.

A l'issue des étapes 108 et 110, chaque phrase qui a été conservée subit une étape 114 de création d'un identifiant de la phrase, appelé brique. Cet identifiant, ou brique, correspond à un ensemble de données, dont certaines sont élaborées à partir du contenu de la phrase, cet ensemble étant dénommé « brique », ou « brique cognitive L'attribution de la brique comprend un certain nombre d'étapes, décrites ci-après.

L'étape 114 comprend une première étape 116 d'attribution d'un identifiant à la phrase, à savoir un identifiant numérique. Cet identifiant est créé pour caractériser l'ensemble des données en cours de construction autour de cette phrase, constitutives de la brique. On notera que deux identifiants différents peuvent renvoyer à une même phrase. En effet, ce qui constitue une brique est au-delà de la phrase, de son contexte et des autres briques auxquelles elle est rattachée. D'un point de vue cognitif, une phrase telle que « la crise actuelle réduit profondément la confiance du pays en son avenir » peut en effet renvoyer à plusieurs crises, fonction notamment de l'époque à laquelle cette phrase est rédigée, ou du fait qu'il s'agisse d'une crise politique, économique ou financière par exemple, mais également à différents pays.

L'étape 114 comprend également une étape 118 de détermination de la nature de la phrase. Cette étape 118 consiste à déterminer si la phrase correspond à une question, à un argument positif ou à un argument négatif (dénommé « argument contraire »). Par exemple, la présence d'un point d'interrogation implique que la phrase est une question. La présence d'une formule négative (« ne ... pas ») implique que la phrase peut être considérée comme un argument contraire, etc.

L'étape 114 comprend par ailleurs une étape 120 de constitution d'un triplet d'informations. Plus précisément, à partir du type de phrase déterminé, on constitue un triplet d'informations qui sera une composante de la brique. Ce triplet comprend un argument, une question correspondant à l'argument, et un argument contraire, ce dernier correspondant au texte de l'argument incluant une formule de négation. Le triplet se présente donc sous la forme {argument, question, argument contraire}. Après avoir détecté entre ces trois modes la nature de la phrase rédigée, au cours de l'étape 118, le programme propose de lui-même une rédaction des deux autres textes. Plusieurs rédactions seraient le plus souvent envisageables, en raison notamment de différentes formes de négation possible d'un même argument. Le programme en élabore une forme possible.

Par exemple, dans le cas de la phrase 1', *« la spéculation financière est une preuve de l'immoralisme du capitalisme »,* le triplet constitué à l'issue de l'étape 120 est
- argument = *« la spéculation financière est une preuve de l'immoralisme du capitalisme* »
- question = *« est-ce que la spéculation financière est une preuve de l'immoralisme du capitalisme ? »,*
- argument contraire = *« la spéculation financière n'est pas une preuve de l'immoralisme du capitalisme ».*

On passe ensuite à une étape 122 de qualification de la brique. Plus précisément dans cet exemple, le texte de l'argument est analysé pour le qualifier automatiquement en une proposition ou un constat. Cette analyse comprend une analyse sémantique de l'argument, comprenant une étape de test sur la présence dans l'argument de certains mots prédéterminés permettant de qualifier l'argument en proposition. Par exemple, si l'argument comprend des expressions telles que « il faudrait que », « on devrait », etc., on qualifie la brique comme une proposition. En revanche, si le résultat de l'étape de test est nul, c'est-à-dire que l'on n'a pas identifié de mots préalablement enregistrés comme significatifs d'une proposition, alors on qualifie la brique comme un constat.

On notera que dans l'étape 122 de qualification de la brique proposée ci-dessus, une première qualification consiste à indiquer si la brique est une proposition ou un constat. Toutefois, l'étape 122 pourrait prendre d'autres formes de qualifications, en combinaison ou à la place de la première qualification décrite. Par exemple, une deuxième qualification de la brique pourrait être l'attribution d'un contexte à la brique. Ce contexte pourrait comprendre notamment un vecteur de mots, permettant de caractériser la brique dans un environnement particulier. Plus précisément, on considère qu'un lexique de mots prédéterminés constitue une base vectorielle dont une famille génératrice est constituée par l'ensemble des mots du lexique, et l'on définit le contexte comme un vecteur dans cette base vectorielle, dont les coefficients correspondent aux projections du vecteur sur chacun des vecteurs de la famille.

Par exemple, la famille génératrice de la base vectorielle est la suivante : (moral, capitalisme, amoral, spéculation, économique, géographique, politique...), et le contexte associé à la brique au cours de l'étape 122 peut être le vecteur suivant : (22, 37, 15, 3, 15, 0, 2...). Chaque coefficient confère un poids au mot correspondant et est défini à partir des mots de la phrase associée à la brique et des contextes de briques considérées comme similaires, supérieures ou inférieures dans la base de données 24. Dans le présent exemple, on attribue à la brique créée le même contexte que celui de la brique n+1 définie au cours de l'étape 102 décrite ci-dessus. On pourrait éventuellement modifier légèrement le contexte, en tenant compte en outre des mots présents dans la phrase associée à la brique. En effet, de préférence, chaque brique dispose d'un contexte spécifique, fonction de ses surbriques, sousbriques et briques de niveau de développement équivalent. Toutefois en pratique, afin de réduire les calculs ou l'espace mémoire en l'absence de capacités suffisantes, on peut envisager d'associer un contexte unique à un ensemble de briques, par approximation.

Selon un troisième exemple de qualification de la brique, on attribue une note relative à la fiabilité de la brique, ou encore à l'importance de la brique. Cette note peut être donnée automatiquement, suite à une analyse par exemple du profil de l'utilisateur en train de saisir le groupe de données, ou bien elle peut être saisie directement par l'utilisateur lui-même ou un autre utilisateur, ultérieurement. Elle peut également dépendre de la note des briques supérieures, similaires ou inférieures.

A l'issue ou au cours de l'étape 114 de création de brique, comprenant dans cet exemple les étapes 116 à 122, on procède à une étape 124 de stockage de la brique créée dans la base de données 24.

Plus précisément, selon un exemple non limitatif et donné uniquement à titre illustratif, la base de données 24 peut comprendre une table appelée « table des briques », comprenant les champs suivants :
- identifiant numérique de la brique,
- triplet d'informations : (argument, question, argument contraire),
- qualification 1 : constat ou proposition,
- qualification 2 : contexte, sous forme d'un vecteur,
- etc.

A l'issue des étapes 114 de création de brique et 124 de stockage, on passe à une étape 126 de structuration de la brique et une étape 134 de stockage de cette structuration dans la base de données 24. L'étape 126 comprend une étape d'attribution d'un niveau de développement de la brique, ce niveau correspondant par exemple à une position de la brique dans la base de données 24 par rapport à d'autres briques. En d'autres termes, l'étape 126 consiste à établir un ou plusieurs liens entre la brique et d'autres briques de la base de données 24. On peut par exemple identifier une ou plusieurs briques similaires à celle considérée, auquel cas le niveau de développement de la brique est identique à ces briques similaires ; une ou plusieurs briques supérieures à celle considérée, auquel cas le niveau de développement de la brique est inférieur de 1 point à ces briques supérieures ; et/ou une ou plusieurs briques inférieures à celle considérée, auquel cas le niveau de développement de la brique est supérieur de 1 point à ces briques inférieures.

L'attribution 126 du niveau de développement peut comprendre une étape d'attribution automatique 128, le niveau de développement étant défini par la zone de saisie 16. Dans le présent exemple, on attribue à la brique un niveau « n », inférieur de 1 point au niveau « n+1 » de la brique principale créée au cours de l'étape 102.

De manière alternative ou en combinaison, l'attribution 126 du niveau de développement de la brique peut comprendre une étape 130 d'analyse de la brique. Dans ce cas, l'attribution 126 comprend une étape d'analyse de la phrase à laquelle correspond la brique considérée, l'analyse pouvant comprendre une recherche d'un mot de liaison dans la phrase, permettant de déterminer un lien par rapport à une phrase précédente. Par exemple, la présence du mot « donc » implique un niveau « n-1 » par rapport à la brique d'une phrase précédente, la présence de mots du type « de même », « par ailleurs », « en outre », « ensuite », « enfin », etc. implique un niveau identique « n » par rapport à la brique d'une phrase précédente, la présence de mots du type « car » ou « par exemple » implique un niveau « n+1 » par rapport à la brique d'une phrase précédente.

On notera que cette étape 130 de structuration de la brique par analyse de la phrase peut permettre de déterminer un lien par rapport à une phrase qui précède directement ou indirectement la phrase. Par exemple, dans le cas où le mot de liaison est identifié dans une phrase correspondant à la première phrase d'un paragraphe (une phrase suivant directement un retour à la ligne), alors le niveau de la brique est déterminé par rapport au niveau de la brique d'une première phrase d'un autre paragraphe précédent (une phrase suivant directement un retour à la ligne précédent).

De manière alternative ou en combinaison, l'étape 130 d'analyse de la brique comprend une analyse de la proximité sémantique de la brique avec d'autres briques stockées dans la base de données 24. Dans ce cas, on considère que si la brique est très proche sémantiquement d'une autre brique de la base 24, on lui attribue le même niveau de développement.

L'étape 126 de structuration de la brique peut en outre comporter une étape 132 de qualification du lien établi. Une première qualification peut être le type de structuration qu'apporte le lien : par exemple on peut déterminer s'il s'agit d'un lien dialectique entre les deux briques ou d'un lien pyramidal. Le mode dialectique est caractérisé par une présentation des arguments selon qu'ils appartiennent à la thèse d'une brique supérieure, c'est-à-dire répondant positivement à la question du triplet de la brique supérieure ; à l'antithèse, c'est-à-dire de ceux répondant négativement à la question d'une brique supérieure ; ou à une troisième catégorie, comprenant des éléments non classés ou pouvant appartenir à la synthèse d'une brique supérieure. Le mode pyramidal est caractérisé par une présentation indépendante de l'appartenance d'un argument à la thèse ou à l'antithèse d'une brique supérieure, c'est-à-dire que la brique inférieure constitue un thème particulier de la brique supérieure. Une deuxième qualification peut être l'attribution d'une note relative à la fiabilité du lien, ou encore à l'importance du lien.

Selon un exemple non limitatif et donné uniquement à titre illustratif, l'étape 134 de stockage de la structuration dans la base de données 24 peut comprendre l'enregistrement du lien entre la brique et d'autres briques dans une table appelée « Table des liens », comprenant les champs suivants :
- identifiant numérique du lien,
- identifiant numérique de la brique supérieure du lien,
- identifiant numérique de la brique inférieure du lien,
- qualification 1 du lien : dialectique de la thèse, dialectique de l'anti-thèse pyramidal, etc.
- qualification 2 du lien : fiabilité,
- qualification 3 du lien : importance,
- etc.

A l'issue des étapes 126 de structuration de la brique et 134 de stockage, on passe à une étape 136 de recherche dans la base de données de briques considérées comme « briques proches » de la brique considérée. Selon un premier exemple, les briques proches peuvent par exemple comprendre des briques d'un même niveau de développement que la brique considérée et se trouvant dans le même contexte. Selon un deuxième exemple, les briques proches peuvent comprendre des briques présentant une similarité sémantique avec la brique considérée, c'est-à-dire que le nombre de mots commun des arguments de chacune des briques est supérieur à un seuil prédéfini.

L'étape 136 de recherche des briques similaires est suivie d'une étape 138 d'importation et d'affichage, dans la zone 16, des données associées aux briques proches identifiées et/ou à leurs sous-briques. Plus précisément, il s'agit d'un affichage des arguments correspondant à chaque brique ou sous-brique. De préférence, on facilite la lisibilité en mettant en évidence le lien entre les briques. Par exemple, une sous-brique est présentée en retrait par rapport à sa brique supérieure.

Eventuellement, l'étape 138 d'affichage peut être suivie d'une étape 140 au cours de laquelle l'utilisateur modifie ou qualifie les briques affichées ou leurs liens. Par exemple, l'utilisateur peut restructurer les arguments (donc les briques correspondantes) proposés, par une action de glisser-déposer au moyen d'un pointeur ou par son clavier. Selon un autre exemple parmi d'autres, il peut cliquer pour sélectionner puis positionner une brique à un niveau de développement donné d'une brique affichée. Il peut ainsi indiquer que l'un (ou plusieurs) des arguments est un sous-argument d'un autre, que deux arguments doivent être regroupés en développement d'un « sur-argument », qu'un argument doit être positionné avant ou après un autre, qu'un argument constitue un élément de la thèse, de l'antithèse ou au-delà de ces deux catégories. On comprend que l'utilisateur peut également modifier les qualifications des arguments, par exemple en modifiant ou en ajoutant des informations relatives à leur importance ou leur fiabilité. Par ailleurs, l'utilisateur peut également modifier, supprimer ou encore compléter un argument. Cette étape 140 est suivie d'une étape 142 de stockage des modifications correspondantes dans la base de données 24. De façon ergonomique pour l'utilisateur, les modifications peuvent être effectuées en mettant en oeuvre une simple étape de glisser-déposer d'un groupe de mots.

L'étape d'affichage 138 peut également être suivie d'étape d'affichage d'autres informations, en lien avec ce qui vient d'être affiché. Par exemple, l'utilisateur peut obtenir le développement d'un argument et la réponse apportée à la question correspondante, ou alors cliquer sur une succession de liens pour atteindre des arguments correspondant à des briques supérieures, similaires ou inférieures.

Au fur et à mesure que l'utilisateur saisit des phrases dans la zone 16, les briques proches correspondantes viennent s'afficher en-dessous de chacune des phrases saisies, de sorte que la zone de saisie 16 peut prendre une forme similaire à celle illustrée sur la figure 4. Comme on peut le voir, la zone 16 comprend alors des zones 150, 152, 154 affichant les phrases 1, 2 et 3 en cours de saisie par l'utilisateur. Un curseur 156, positionné dans la zone 154, montre que l'utilisateur est train de saisir la phrase 3. Par ailleurs, des zones 158, 160 affichent les données importées au cours du procédé illustré que la figure 2. Comme on peut le constater sur la figure 4, les zones 158, 160 affichant les données importées sont mises en retrait par rapport aux données 150, 152, 154 initialement saisies par l'utilisateur. Par ailleurs, de façon avantageuse, on prévoit une mise en forme différente pour le texte des zones 150, 152, 154 et celui des zones 158, 160. Par exemple, l'un est en italique et pas l'autre, ou bien les couleurs de polices sont différentes. Par ailleurs, au sein même des zones 158, 160 affichant les données importées, on peut prévoir un affichage illustrant le niveau de développement des données importées. En particulier, des données 162, 162', 162" associées à des briques proches ayant dans la base de données le même niveau de développement que la brique identifiant la phrase 1 se trouvent toutes alignées à gauche dans la zone 158, et des données 164 associées à une brique proche considérée comme une sous-brique de la brique associée aux données 162 sont affichées en retrait à droite par rapport aux données 162.

Le procédé d'affichage des données de la figure 4 va à présent être décrit, en référence à la figure 5. Initialement au début de la saisie, les phrases 1 et 2 sont affichées l'une à la suite de l'autre, dans la zone 150. Puis, une fois le point final de cette phrase détecté, au cours de la mise en oeuvre de l'étape 108 de reconnaissance de la phrase 1 ; ou bien dès qu'un nombre paramétrable de mots de taille significative est dépassé (après nettoyage de la phrase, par exemple par suppression des termes de personnalisation, etc.), par exemple une fois que trois mots de taille significative sont détectés ; ou encore une fois un seuil de significativité des mots employés est dépassé, correspondant à la probabilité de matching des termes employés au regard de ceux dans la base de donnée 24 ; on passe à une étape 170 de modification de l'affichage, au cours de laquelle la phrase 2 glisse automatiquement vers le bas et la gauche, dans la zone 152. De manière à renforcer l'intelligibilité des évolutions visuelles, on affiche la phrase 2 en cours de déplacement, ce qui permet à l'utilisateur de mieux visualiser par la suite les informations venant de lui et celles qui ont été importées. L'étape 170 est suivie de deux étapes 172 et 174, qui peuvent avoir lieu de façon simultanée ou l'une à la suite de l'autre. L'étape 172 est une étape d'affichage de la zone 158, soit en une seule fois au cours de laquelle toutes les données de la zone 158 sont affichées d'un coup, soit de façon progressive, au fur et à mesure que le procédé identifie des données à importer. Dans les deux cas, l'affichage de la zone 158 peut être combiné à une modification de la zone 152, qui s'abaisse ou se relève pour laisser la place à l'extension de la zone 158. Par ailleurs, de façon similaire à l'étape 170, l'étape 172 affiche la zone 158 en cours de création et de modification, pour mieux visualiser les informations importées. L'étape 174 est quant-à-elle une étape de modification de l'affichage des phrases saisies, similaire à l'étape 170 : une fois la phrase 2 terminée d'être saisie, c'est-à-dire une fois le point final de cette phrase détecté, un nombre de mots de taille significative dépassé, et/ou un seuil de significativité des mots dépassé, l'affichage est modifié à nouveau de sorte que la suite des données, à savoir le début de la phrase 3, glisse vers la zone 154. Une étape similaire à l'étape 172 peut alors suivre, pour l'affichage de la zone 160.

Eventuellement, l'étape 172 d'affichage de la zone 158 est suivie d'une étape 176 d'affichage des modifications faites par l'utilisateur au cours de l'étape 140. En d'autres termes, cette étape 176 peut comprendre une étape de glisser-déposer de certaines des données importées ou une étape de saisie de modifications de qualifications de certaines des données importées, donc d'une ou plusieurs briques proches.

Selon un autre exemple d'affichage, notamment moins lourd en terme de calculs et d'espace mémoire, on affiche les données importées uniquement en lien avec la phrase en cours de saisie par l'utilisateur.

Selon un second exemple de réalisation, le procédé est mis en oeuvre sur un texte déjà rédigé, un ensemble de textes, tel qu'un texte affiché sur une page Internet existante, et/ou sur une page d'un réseau social, un texte enregistré sur un serveur ou un terminal de communication tel que le terminal 20, au sein d'une entreprise ou chez un particulier, etc. ainsi que toute autre source comprenant des éléments textuels ou toute forme de données alphanumérique.

Le procédé permet de créer et utiliser des briques cognitives de façon analogue à ce qui a été présenté précédemment. Ainsi, les étapes suivantes peuvent notamment être mises en oeuvre sur le texte complet, prises dans cet ordre ou dans un autre : décomposition 108 en phrases, attribution 116 d'un identifiant numérique à la phrase, détermination 118 de la nature de la phrase (question, argument, argument contraire), nettoyage sémantique 110 de la phrase, constitution 120 d'un triplet d'informations {argument, question, argument contraire}, qualification 122 de la brique, recherche 136 et importation 138 de contenu de briques proches, modification ou qualification 140 données importées, affichage et modification d'affichage 170 à 176 des données du texte et des données importées, etc.

L'étape 126 d'attribution de niveau de développement de chaque brique présente toutefois quelques différences. En effet, on peut utiliser la structure du texte pour faire des liens entre les phrases du texte, et donc affiner la précision du niveau de développement des briques.

Plus précisément, l'étape 126 d'attribution de niveau de développement peut comprendre l'une ou plusieurs des étapes suivantes :
- une étape 128 similaire à celle décrite précédemment, d'attribution automatique du niveau de développement, ce dernier étant défini par le texte préalablement rédigé, il s'agit par exemple du niveau de développement inférieur à celui d'une brique article permettant d'identifier le texte ;
- une étape 130 similaire à celle décrite précédemment, comprenant la recherche d'un mot de liaison dans la phrase, suivie ensuite de l'attribution d'un niveau identique, supérieur ou inférieur à celui de l'une des phrases qui précèdent ;
- une étape similaire à celle décrite précédemment d'analyse de la proximité sémantique de la brique avec d'autres briques stockées dans la base de données 24 ;
- une étape d'identification de paragraphes dans le texte, par identification d'un ou plusieurs retours à la ligne par exemple, pouvant être avantageusement suivie d'une étape de recherche de mots de liaison entre la première phrase d'un paragraphe et celle d'un paragraphe précédent et d'attribution, à partir du type de mot de liaison, d'un niveau de développement identique, supérieur ou inférieur à celui du paragraphe précédent ; par ailleurs la présence d'arguments au sein d'un même paragraphe peut induire automatiquement un niveau de développement que les arguments sont liés entre eux, indépendamment de toute formule écrite indiquant l'existence d'un lien.

On comprend que les procédés présentés ci-dessus peuvent comprendre de nombreuses variantes et en particulier des caractéristiques permettant de faciliter les déductions automatiques et les affichages.

En particulier, la robustesse des déductions automatiques de briques et de liens entre elles peut être consolidée par la redondance ou non des briques ou des liens déduits de l'analyse d'autres groupes de données ou documents. En particulier, un procédé de scoring peut permettre d'identifier des briques fréquemment liées à d'autres et la probabilité d'obtenir tel ou tel lien.

Par ailleurs, on peut prévoir que briques et niveaux de développement constitués au cours de procédés tels que décrits précédemment et non encore revus par un utilisateur soient enregistrés comme tels et soumis à validation lors de leur première présentation auprès d'un individu. La probabilité de succès des différents processus automatiques indiqués, notamment de déduction de la structure liant les différentes briques, est estimée à partir de ces corrections ou validation, et peut être avantageusement réintroduite dans le procédé de scoring proposé ci-dessus.

On comprend que l'étape 104 d'affichage de la zone de saisie 16 en-dessous de l'article 12 peut être suivie de l'importation de briques proches de la brique principale créée au cours de l'étape 102.

Par ailleurs, au cours de l'étape 124 de stockage de briques créées dans la base de données, on peut mettre en oeuvre une étape de recherche, dans la base de données 24, de briques semblables, présentant une très forte similarité sémantique et/ou de contexte, et le cas échéant une étape de suppression de la brique dans la liste des briques à ajouter. Les liens qui auraient été créés avec cette brique non ajoutée le sont alors avec la brique ainsi retrouvée, de façon similaire à ce qui a été présenté ci-dessus. La recherche de brique semblable est avantageusement à nouveau contextualisée, afin d'en accroître la pertinence.

On comprend que, selon des variantes du procédé, le texte peut être saisi, non pas dans une zone de saisie d'une page Internet, mais dans un fichier stocké sur le terminal. Dans les deux cas, le programme de mise en oeuvre du procédé de structuration peut être déclenché simultanément à la saisie, de façon automatique ou suite à une activation par l'utilisateur. Ce programme peut être associé, intégralement ou partiellement, à la page Internet sur laquelle l'utilisateur va saisir le texte, ou bien être installé localement, intégralement ou partiellement, sur le terminal.

On comprend par ailleurs que l'étape d'analyse du groupe de données ou de phrases isolées peut être effectuée localement sur le terminal 20, ou bien sur le serveur hébergeant la base de données 24. Dans ce cas, le programme de mise en oeuvre du procédé envoie le groupe de données saisi à la base de données 24 avant les étapes d'analyse.

Selon encore une variante intéressante, les éléments importés et affichés peuvent être récupérés par l'utilisateur pour être substitués à la phrase en cours de saisie, par exemple par double clic ou par déplacement du curseur vers le bas au cours de l'affichage d'une zone de saisie 158, 160, puis validation par l'utilisateur. L'utilisateur peut ainsi sélectionner l'un des éléments proposés et l'insérer directement là où il le souhaite dans le débat ou en substitution de la phrase qu'il était en train de rédiger. La recherche est avantageusement présentée à proximité du texte en cours de rédaction afin de faciliter la réintégration de résultats dans l'argumentaire.

De façon particulièrement avantageuse également, on peut prévoir d'élaborer les briques ou les niveaux de développement en fonction des individus : alors que les briques sont généralement indépendantes des individus (elles peuvent toutefois l'être, par exemple dans le choix des préférences rédactionnelles de mêmes briques, ou encore dans le cas d'une utilisation exclusivement personnelle du procédé), chaque individu peut avoir sa propre manière de structurer une argumentation, donc des niveaux de développement propres à chaque individu ou à des groupes d'individus. Une telle structuration des données permet de déduire par la suite des écoles de pensée, spécifiques à un débat ou transversales, une fiabilité objective des arguments fonction notamment du nombre et de l'importance des arguments de la thèse relativement à ceux de l'antithèse, des compléments argumentaires en faveur (ceux allant en défaveur de ceux en défaveur du présent argument (double négation), ou ceux en faveur des arguments en faveur, etc.).

On peut dans ce cas créer dans la base de données 24 une table de liens par individus, présentant par exemple la structure suivante :
- identifiant numérique du lien,
- identifiant numérique des utilisateurs ayant fait ou approuvé le lien.

On peut en outre créer dans la base 24 une table des écoles de pensée, une école de pensée regroupant des individus et une pensée, plus précisément regroupant des individus caractérisés par des pensées les plus similaires au sein de ce même groupe tout en étant les plus distinctes de celles des autres écoles de pensées. De ces groupes d'individus peuvent être déduites des « pensées moyennes », descriptives de ces écoles de pensées. Au-delà de ces écoles de pensées, une pensée moyenne peut être déduite à partir principalement de la moyenne des différents paramètres retenus. La pensée d'un individu est principalement définie comme l'ensemble des données relatives aux liens qu'il a définis entre les briques et les qualificatifs de ceux et celles-ci. On notera qu'une école de pensée peut être calculée pour une brique donnée ou pour tout regroupement de briques.

Parmi les qualificatifs que l'on peut donner à un lien ou une brique, on peut envisager la fiabilité. Selon un certain mode de réalisation, cette fiabilité sera déduite à partir du nombre relatif d'arguments présents dans une thèse et de leur poids (fonction notamment de leur importance), au regard de ceux de l'antithèse. Seront par exemple considérées comme très fiables les briques ayant en sous-briques beaucoup d'arguments dans la thèse et aucun (ou très peu ou avec un poids réduit) argument en antithèse.

Par ailleurs, un utilisateur ou gestionnaire de l'application peut configurer le procédé de façon à observer les pensées ou débats sous différents angles. Il peut ainsi, par exemple :
- choisir entre une structuration pyramidale ou dialectique des briques entre elles,
- choisir de voir afficher les principaux points de consensus, ou au contraire les principaux points de divergence entre individus, les éléments les plus fiables ou au contraire ceux qui le sont le moins, ou encore
- choisir de prioriser un critère plus qu'un autre (importance, fiabilité, ou tout autre paramètre choisi par le gestionnaire de l'application).

Selon encore une possibilité de mise en oeuvre, il est possible d'enregistrer plusieurs rédactions possibles pour un argument d'une même brique.

## Revendications

1. Procédé de structuration de données se présentant sous forme alphanumérique, **caractérisé en ce qu'**il comprend les étapes suivantes :
- une étape (108) de reconnaissance d'une ou plusieurs phrases dans le groupe de données en phrases, par détection de signes de ponctuation prédéterminés se trouvant parmi les données ou par analyse syntaxique du groupe de données,
- une étape (114) de création d'un identifiant de la phrase, appelé brique,
- une étape (136) de recherche, dans une base de données (24), de briques considérées comme des briques proches de cette brique créée,
- une étape (138) d'importation de données associées à ces briques proches dans la base de données (24).

2. Procédé selon la revendication précédente, au cours duquel la création (114) de la brique comporte l'une ou plusieurs des étapes suivantes :
- une étape (116) d'attribution d'un identifiant numérique à la phrase ;
- une étape (118) de détermination de la nature de la phrase ;
- une étape (120) de constitution d'un triplet d'informations ({argument, question, argument contraire}), comprenant de préférence un argument, une question correspondant à l'argument, et un argument contraire ; et/ou
- une étape (122) de qualification de la brique.

3. Procédé selon la revendication précédente, dans lequel l'étape (122) de qualification de la brique comprend l'une ou plusieurs des étapes suivantes :
- une étape d'analyse sémantique d'un argument, d'une question ou d'un argument contraire, constitués à partir de la phrase, comprenant une étape de test sur la présence dans l'argument de certains mots prédéterminés permettant de qualifier l'argument en proposition ;
- une étape d'attribution d'un contexte à la brique, le contexte étant déduit à partir d'un vecteur (22, 37, 15, 3, 15, 0, 2...) dans une base vectorielle (moral, capitalisme, amoral, spéculation, économique, géographique, politique...) constituée par un lexique de mots prédéterminés ; et/ou
- une étape d'attribution d'une note relative à la fiabilité ou à l'importance de la brique.

4. Procédé selon l'une quelconque des revendications précédentes, comprenant une étape (126) d'attribution d'un niveau de développement de la brique, correspondant à l'attribution d'un ou plusieurs liens entre la brique créée et d'autres briques stockées dans la base de données (24), l'étape (126) d'attribution du niveau de développement comprenant de préférence :
- une étape (128) d'attribution automatique du niveau de développement, le niveau de développement étant défini par la zone de texte (16), et/ou
- une étape (130) d'analyse de la brique, l'analyse pouvant comprendre une recherche d'un mot de liaison dans la phrase correspondante, ou une analyse de la proximité sémantique de la brique avec d'autres briques stockées dans la base de données (24).

5. Procédé selon l'une quelconque des revendications précédentes, dans lequel les briques proches recherchées au cours de l'étape de recherche (136) présentent une similarité sémantique avec la brique considérée et/ou présentent un même niveau de développement et/ou un contexte similaire ou identique à celui de la brique considérée.

6. Procédé selon l'une quelconque des revendications précédentes, au cours duquel la reconnaissance (108) d'une phrase dans le groupe de données est suivie d'une étape (110) de nettoyage sémantique de la phrase, comprenant de préférence une étape de suppression des éléments de personnalisation et/ou des éléments de liaison de la phrase.

7. Procédé selon l'une quelconque des revendications précédentes, au cours duquel la reconnaissance (108) d'une phrase dans le groupe de données ou l'étape (110) de nettoyage sémantique de la phrase est suivie d'une recherche, dans la base de données, d'un score de significativité attribué à chaque mot de la phrase, du calcul d'un score moyen de la phrase, puis dans le cas où le score est inférieur à un seuil prédéterminé, d'une étape (112) de suppression de la phrase ou d'absence de prise en compte de la phrase.

8. Procédé selon la revendication précédente, mis en oeuvre au cours de la saisie du groupe de données ou suite à une activation de la part d'un utilisateur..

9. Procédé selon l'une quelconque des revendications précédentes, au cours duquel l'étape (114) de création de la brique est suivie (directement ou indirectement) par une étape (124) de stockage de la brique créée dans la base de données (24).

10. Procédé selon l'une quelconque des revendications précédentes, au cours duquel l'étape d'importation (138) comprend une étape (138) d'affichage des données associées à ces briques proches et est suivie d'une étape (140) de modification, par l'utilisateur, des données affichées, puis est de préférence suivie d'une étape (142) de stockage des modifications correspondantes dans la base de données (24).

11. Procédé selon l'une quelconque des revendications précédentes, comportant en outre une étape de création d'une brique particulière appelée « entité cognitive », constituant un identifiant d'un ensemble de phrases, c'est-à-dire d'une pluralité de phrases, regroupant de préférence un ensemble de briques, sur la base d'un positionnement sur l'interface de saisie, d'une proximité sémantique forte au regard des autres briques présentes, ou encore de liens logiques indiquant un changement d'ensemble argumentaire.
